Europäisches Patentamt

(19) European Patent Office

Office européen des brevets

(11) Publication number: **0 276 148**
**A2**

# (12) EUROPEAN PATENT APPLICATION

(21) Application number: **88300472.3**

(22) Date of filing: **20.01.88**

(51) Int. Cl.⁴: **C 04 B 35/64**

(30) Priority: **20.01.87 US 4952**

(43) Date of publication of application:
**27.07.88 Bulletin 88/30**

(84) Designated Contracting States:
**DE FR GB IT NL SE**

(71) Applicant: **KERAMONT ADVANCED CERAMIC
PRODUCTS CORPORATION
4233 S. Fremont Avenue
Tucson Arizona 85714 (US)**

(72) Inventor: **Lonkar, Nitin R.
5290 S. Park Ave., Apt. 2119
Tucson Arizona 85706 (US)**

**Loutfy, Raouf O.
4660 N. Via Madre
Tucson Arizona 85749 (US)**

**Cox, Carl V.
1509 S. Burning Tree
Tucson Arizona 85710 (US)**

(74) Representative: **Whalley, Kevin
MARKS & CLERK 57/60 Lincoln's Inn Fields
London WC2A 3LS (GB)**

(54) **Process for removing carbon or carbon compounds comprised in binders from non-oxide ceramics, and sintered bodies obtained therefrom.**

(57) Process for removing carbon or carbon compounds comprised in ceramics, comprising heating a non-oxide ceramic compacted body in an oxygen atmosphere at a temperature from about 450°C to 820°C to obtain complete removal of the organic binder while avoiding any oxidation of the non-oxide ceramic body.

EP 0 276 148 A2

## Description

## "PROCESS FOR REMOVING CARBON OR CARBON COMPOUNDS COMPRISED IN BINDERS FROM NON-OXIDE CERAMICS, AND SINTERED BODIES OBTAINED THEREFROM"

The present invention relates to a process for removing carbon or carbon compounds comprised in or deriving from binders from non-oxide ceramics, and to sintered bodies obtained therefrom.

Particularly, the invention relates to the removal of the organic binders without oxidizing the ceramic.

Binders can be defined as organic compounds with high bonding strength. Various types of binders are commonly used in the fabrication of various ceramics. These binders are expected to burn-off clearly with minimum residue and not interfere with the sintering mechanism of the ceramics.

In the first place binders are necessary to hold the ceramic powder together and provide sufficient green compact strength for handling purposes. Secondly, the coating or binder on the ceramic powder makes it better flowable, which in turn results in uniform green density of the compact.

Non-oxide ceramics in general cannot be heated in an oxidizing atmosphere. It is well known that thermodynamically these non-oxide ceramics tend to oxidize even at room temperature in the presence of oxygen. Hence sintering of non-oxide ceramics has to be carried out in non-oxidizing atmospheres, like $N_2$, Ar, or $N_2 + H_2$ as described, for example, in European patent application no. EP-A-80,213 and US patent no. US-A-4,540,673.

It has to be noted that, if the organic binders are heated in nitrogen, they do not oxidize and hence decompose to lower molecular weight hydrocarbons which remain in the ceramic compact. These compounds affect the sintering mechanism and then the properties of the sintered product and hence are undesirable in the ceramic compact at the sintering stage. Thus the problem encountered in sintering non-oxide ceramics is the removal and clear bake-out burn off of organic binders.

It is also known from US patent no. US-A-4.164,528 that metal nitride moldings may contain free carbon and that according to this patent this carbon can be removed by firing the sintered molding at a temperature of 800°C to 1400°C under an oxidizing temperature, while by firing at a temperature lower than 800°C, carbon cannot be removed.

It has surprisingly been found that it is possible to remove organic binders from non-oxide ceramics during sintering, both by not oxidizing the ceramic and avoiding the presence of undesirable binder decomposition compounds in the ceramic compact.

The present invention provides a process for removing carbon or carbon compounds comprised in organic binders from non-oxide ceramics, comprising heating a non-oxide ceramic compacted body in an oxygen atmosphere, at a temperature from about 430°C to 820°C, to obtain substantially complete removal of the organic binder while avoiding any oxidation of the non-oxide ceramic body.

Preferably, the heating is carried out at a temperature from 450°C to 700°C.

The invention also provides non-oxidized ceramic sintered bodies free from impurities deriving from the organic binders used during processing of the ceramic powder. The sintered product can be obtained by heating the body, obtained according to the present invention, in a non-oxidizing atmosphere at a temperature higher than that used at the step above, to produce a compeltely sintered body.

For the process of the present invention any non-oxide ceramic compacted body can be used; preferably, the process of the present invention is carried out on AIN, $Si_3N_4$, and BN ceramic bodies, more perferably on those based on AIN.

The process of the present invention permits the elimination of any residue of any binder known in the art and may be generally used during the processing of non-oxide ceramic powders as stated above.

The binders are well known in the art, for example there can be employed an organic material of high molecular weight which is soluble in organic solvents, for example industrial waxes, such as paraffin, ceresine, ozokerite or highly viscous polyglycols, PMMA or PVA.

It is known that these binders have bonding and lubricating properties which, under forming pressure, allow the grains of material to glide on each other into the relative positions which produce a highly compact body.

Generally it is also known that binders have thermoplastic and thermosetting properties.

The functions of the thermoplastic binder is to give coherence to the green body and, when this is in the form of a sheet, a good flexibility and strength. It should also soften by the application of heat to permit the green artefact (body) to be formed.

The function of the thermosetting binder is to cure and be rigid at temperatures at which the thermoplastic binder is losing its strength, e.g. 100-200°C so as to give a rigid cured artefact which will not deform during the sintering process, and help to handle the compact and be a faithful reproduction of the green artefact.

Polyvinylacetate is a suitable thermoplastic binder while a suitable setting binder is an acrylic resin. The setting binder is generally thermosetting, but setting may be induced other than thermally, e.g. by catalyst or radiation.

It is preferred to use a single material having both thermoplastic and thermosetting properties in place of the two separate binders above described and such a material is polyvinylbutyral.

The binder is generally dissolved in a suitable solvent, e.g. methylethyleketone or polyvinylformal. In general there can be used any solvent provided that it burns off at 400°C.

Particularly preferred are non-hygroscopic binders, since moisture is not desired in non-oxide ceramics.

Such binders can also be mixed with suitable plasticizers, which are organic substances well known in the art used to improve the flexibility and reduce the viscosity of the binders.

For example, the plasticizers commonly used with polyvinylbutyral are phthalates, phosphates, polyethyleneglycol ethers, glycerol monoleate, petroleum, ricinoleate, sebacates, citrates, and castor oils, while those used for polyvinyl formal comprise dibenzoate, chlorinated naphthalenes, furfuryl oleate, glycollate, and adipate. Also the plasticisers must burn-off at 400°C.

The use of binders in compacting is particularly necessary when processing small pieces having a complicated geometry.

In order to obtain a fired body having optimal characteristics of fired strength and thermal conductivity, it is of importance to completely remove the binder during sintering together with all its decomposition products, particularly the coke which derives from the carbon present in the organic chain of the binder.

A further requirement for obtaining the optimal characteristics cited hereinabove is that the non-oxide fired body has not to contain impurities of the corresponding oxide; the formation of this oxide easily occurs when heating in an oxygen atmosphere.

For example, the $Al_2O_3$ which forms for oxidation of AlN during firing is very dangerous, since it remarkably lowers the properties of the sintered body, in particular the thermal conductivity of the sintered body with respect to that obtainable for pure AlN.

For example, in the case of AlN according to the present invention, the formation of such oxides does not occur when heating up to temperatures of about 800°C. This has been demonstrated by thermogravimetric analysis, which showed a weight gain in the ceramic bodies only above the cited temperature.

Further, the same analysis carried out on binders and/or plasticizers only confirmed that all the carbon or carbon compounds deriving from organic compounds are completely eliminated by operating at temperatures high than about 400°C.

In the step of removing the organic binder the heating rate is not critical for carrying out the present invention but the most remarkable rate will be the one corresponding to a uniform weight loss of the binder in order to avoid physical defects like cracking and bubbles.

The time for which the heating in oxygen atmosphere is carried out depends on the type of ceramic body composition and on the density of the compact. Generally, such time is of the order of 2 hours, preferably from 2 to 4 hours.

The term "oxygen atmosphere" means pure oxygen, air or gaseous mixtures containing oxygen and free of moisture.

The sintering process only sinters the body, since the binder has already been eliminated in the step of the present invention. As a consequence of that the starting temperature of the sintering process is the temperature at which the binder removal step was carried out; consequently, it is increased to a suitable temperature to effect the sintering of the body.

Generally, non-oxide ceramic sintering temperatures are from 1400 to 2000°C, and they are chosen depending on the type of ceramic.

The same has to be said about the time required for the sintering step. The non-oxidizing atmosphere is, for example, of nitrogen, argon, hydrogen, helium or mixtures of them. Since it is well known that various compounds, particularly oxides, are added to ceramic non-oxide powders as sintering aids an in order to enhance the final properties of the fired body, it is clear that oxygen may be present in the final bodies produced by the process of the present invention, but generally not in the form of the metal oxide corresponding to the basic non-oxide compound.

The invention will be further described with reference to the following illustrative examples.

## Example 1

### Removal of binder in oxygen atmosphere

A mix of ceramic, binder, plasticizer and other organics was prepared in the following proportions.
Ceramic (AlN + 2% by weight of $Y_2O_3$:   96% by weight
Binder (BUTVAR B-76)    : 2% by weight
Plasticizer (Santicizer S-141)    : 1% by weight
Grinding aid (trioleate)    : 1% by weight

This mixture was dissolved in acetone and spray dried to obtain granules. The granules were then weighed and pressed in a hydraulic press at 30,000 psi in a 1/8" diameter die. The obtained pellets were then heated in a quartz-tube furnace, at a rate of 200°C/hr, in a flow of air (100 cc/min), at the temperatures reported in Table 1.

The percentage of residual carbon and colour of the pellets are reported in Table 1, and show that above 450°C the binder has been completely eliminated.

Later the pellets were heated in a nitrogen atmosphere to 1800°C and kept at this temperature for 4 hours in order to obtain AlN sintered pellets.

# 0 276 148

## Table 1

| T (°C) | Residual carbon (% by weight) | Color |
|--------|-------------------------------|-------|
| 200 | 0.99 | yellow-brown |
| 400 | 0.19 | yellow-brown |
| 450 | 0.08 | light-yellow |
| 500 | 0.05 | dull white |
| 600 | 0.05 | white |
| 800 | 0.05 | white |
| 1800 | 0.03 | light grey |

The final sintered pellets had a thermal conductivity of 130 W/m.K. calculated by the following formula:
$$\lambda = \alpha Cp.d$$
wherein $\alpha$ is the thermal diffusivity, d is the bulk density and Cp is the specific heat. Cp was measured by using DSC (differential scanning calorimetry), and $\alpha$ was measured by using a laser flash technique.

This method is described in "Properties Research Laboratory: PRL 631, "thermophysical properties of AlN" by R.E. Taylor and H. Groot - April 1985 - West Lafayette, Indiana.

Example 2 (Comparative example)

Removal of binder in nitrogen atmosphere

Pellets were made as described in Example 1. The pellets were heated in a quartz-tube furnace, at a rate of 200°C/hr in a flow of nitrogen (100 cc/min), at the temperatures reported in Table 2.

The percentage of residual carbon and the colour of the pellets are reported in Table 2, and show that the carbon impurities are present even when heating at 800°C.

Particularly, the pellets developed a yellow grey to dark black colour gradation while increasing the furnace temperature. This indicates that the binder gradually decomposed to hydrocarbons, and then to carbon leaving the black suit in the ceramic.

Later the pellets were heated in a nitrogen atmosphere to 1800°C and kept at this temperature for 4 hours in order to obtain AlN sintered pellets.

The final sintered pellets had a thermal conductivity of 68.2 watt/meter °K, measured by laser flash technique.

## Table 2

| T (°C) | Residual carbon (% by weight) | Color |
|--------|-------------------------------|-------|
| 200 | 1.08 | yellow-grey |
| 400 | 0.71 | yellow-brown |
| 450 | 0.65 | yellow-brown |
| 500 | 0.50 | yellow-brown |
| 600 | 0.28 | brown |
| 800 | 0.15 | dark black |
| 1800 | 0.12 | grey |

Example 3

A thermogravimetric analysis was carried out on the pressed pellets obtained as described in Example 1.

The heating was carried out in air; only above 830°C a slow weight gain was observed, which is correlated to oxidizing of AlN to $Al_2O_3$ as confirmed by chemical analysis. This demonstrates that a treatment in air at temperatures lower than about 820°C can be carried out for complete and easy removal of binder without altering the composition of the non-oxide ceramic powder.

4

## Claims

1. A process for removing carbon or carbon compounds comprised in organic binders from non-oxide ceramics, cahracterised by heating a non-oxide ceramic compacted body in an oxygen atmosphere at a temperature from about 430°C to 820°C, to obtain removal of the organic binder while avoiding oxidation of the non-oxide ceramic body.

2. A process as claimed in claim 1, characterised in that the heating is carried out at a temperature from 450 to 700°C.

3. A process as claimed in claim 1 or 2, characterised in that the non-oxide ceramic is selected from AlN, $Si_3N_4$ and BN.

4. A process as claimed in any of claims 1 to 3, further characterised by heating the non-oxide ceramic compacted body in a non-oxidizing atmosphere at a temperature suitable to produce a completely sintered body.

5. A process as claimed in claim 4, characterised in that the non-oxidizing atmosphere is of nitrogen.

6. A non-oxidized ceramic sintered body free from impurities deriving from carbon or carbon compounds comprised in organic binder used during processing of the powder, characterised in that said sintered body is produced by heating the body obtained by the process of claim 1 in a non-oxidizing atmosphere, at a temperature suitable to produce a completely sintered body.

7. A non-oxidized ceramic sintered body as claimed in claim 6, characterised in that the non-oxide ceramic is AlN, the temperature of binder removal is from 450 to 600°C, and the temperature of the sintering is above 1800°C.